# EUROPEAN PATENT APPLICATION

(11) **EP 4 219 573 A1**
(43) Date of publication of application: **02.08.2023**
(21) Application number: 21872150.4
(22) Date of filing: 07.09.2021
(51) Int. Cl.: C08F 290/06, C08F 299/08, B41J 2/01, C09D 11/101, C09D 11/30, C08G 18/28, C08G 18/61, C08G 18/67, B29C 64/112, B29C 64/314

(54) **ULTRAVIOLET CURABLE SILICONE COMPOSITION AND CURED PRODUCT**

(30) Priority: 23.09.2020 JP 2020158168
(71) Applicant: SHIN-ETSU CHEMICAL CO., LTD., Tokyo 1000005 (JP)
(72) Inventor: MATSUMOTO Nobuaki, Annaka-shi, Gunma 379-0224 (JP); HAGIWARA Mamoru, Annaka-shi, Gunma 379-0224 (JP); OZAI Toshiyuki, Annaka-shi, Gunma 379-0224 (JP); HASHIMOTO Ryota, Annaka-shi, Gunma 379-0224 (JP)
(74) Representative: Peters, Hajo
(86) International application number: PCT/JP2021/032771
(87) International publication number: WO 2022/065019

(57) **Abstract**

Provided is an ultraviolet curable silicone composition capable of being ejected via ink-jet ejection and turned into a cured product with a superior rubber property. The ultraviolet curable silicone composition contains:
(A) a one-end polymerizable organopolysiloxane represented by the following formula (1) 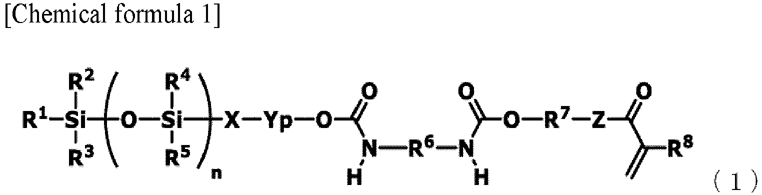 wherein each of R¹, R², R³, R⁴ and R⁵ independently represents a linear or branched alkyl group having 1 to 20 carbon atoms, or an aryl-containing group having 6 to 10 carbon atoms; R⁶ represents a divalent organic group having 2 to 20 carbon atoms; R⁷ represents an alkylene group having 2 to 20 carbon atoms; R⁸ represents a hydrogen atom or a methyl group; n is a number of 1 to 500; X represents an alkylene group having 2 to 20 carbon atoms; Y represents -OCH₂CH₂-, -OCH(CH₃)CH₂- or -OCH₂CH(CH₃)-; p is a number of not smaller than 1; Z is - O- or -NH-; and
(B) a photopolymerization initiator.

## Description

### TECHNICAL FIELD

The present invention relates to an ultraviolet curable silicone composition and a cured product. Particularly, the invention relates to an ultraviolet curable silicone composition capable of being ejected via ink-jet ejection; and a cured product thereof.

### BACKGROUND ART

Ultraviolet curable ink-jet inks in the field of industrial ink jet are slowly going mainstream as they are fast-drying and low-volatile and can be printed even on non-absorbable materials.

Specifically, as for an ink-jet material whose main component is silicone (Patent document 1), it is anticipated that the scope of its industrial uses shall expand more than ever as the material is capable of imparting a favorable rubber property and has an excellent weather resistance in terms of the ink itself; it is desired that such silicone material exhibit a further improved strength after curing.

### PRIOR ART DOCUMENTS

### Patent documents

Patent document 1: WO2018/003381

### SUMMARY OF THE INVENTION

### Problems to be solved by the invention

Thus, it is an object of the present invention to provide an ultraviolet curable silicone composition capable of being ejected via ink-jet ejection and turned into a cured product with a superior rubber property.

### Means to solve the problems

The present invention was completed as a result of diligently conducting a series of studies to achieve the above object. That is, it was found that there could be provided an ultraviolet curable silicone composition capable of being ejected via ink-jet ejection and turned into a cured product with a superior rubber property, by employing a particular ultraviolet curable organopolysiloxane component.

The present invention is to provide the following ultraviolet curable silicone composition.
[1] An ultraviolet curable silicone composition comprising:
   (A) a one-end polymerizable organopolysiloxane represented by the following formula (1) 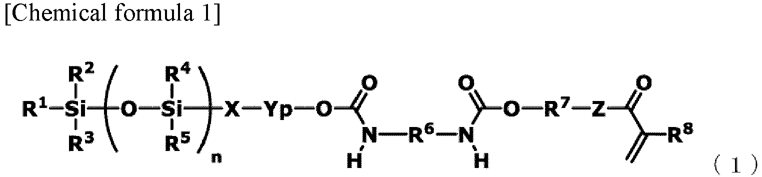 wherein each of R¹, R², R³, R⁴ and R⁵ independently represents a linear or branched alkyl group having 1 to 20 carbon atoms, or an aryl-containing group having 6 to 10 carbon atoms; R⁶ represents a divalent organic group having 2 to 20 carbon atoms; R⁷ represents an alkylene group having 2 to 20 carbon atoms; R⁸ represents a hydrogen atom or a methyl group; n is a number of 1 to 500; X represents an alkylene group having 2 to 20 carbon atoms; Y represents -OCH₂CH₂-, -OCH(CH₃)CH₂- or -OCH₂CH(CH₃)-; p is a number of not smaller than 1; Z is - O- or -NH-; and
   (B) a photopolymerization initiator.
[2] The ultraviolet curable silicone composition according to [1], wherein in the general formula (1), R¹ is an n-butyl group, each of R², R³, R⁴ and R⁵ is a methyl group, R⁷ is a dimethylene group, and Z is -O-.
[3] The ultraviolet curable silicone composition according to [1] or [2], wherein in the general formula (1), R⁶ is a divalent residue derived from a diisocyanate selected from the group consisting of trimethylhexamethylene diisocyanate (TMHMDI), isophorone diisocyanate (IPDI), methylenediphenyl diisocyanate (MDI), and 1,6-hexamethylene diisocyanate (HMDI).
[4] The ultraviolet curable silicone composition according to any one of [1] to [3], further comprising:
   (C) an organopolysiloxane represented by the following general formula (2) 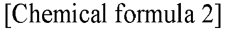 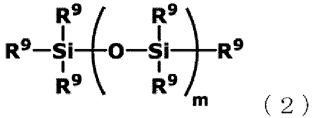 wherein each R⁹ independently represents a group selected from a monovalent aliphatic hydrocarbon group having 1 to 10 carbon atoms, an acryloyl group, a methacryloyl group, an alkyl acrylate group, an alkyl methacrylate group, an acrylamide group and a methacrylamide group; the organopolysiloxane represented by the formula (2) has, in each molecule, at least two groups that are selected from an acryloyl group, a methacryloyl group, an alkyl acrylate group, an alkyl methacrylate group, an acrylamide group and a methacrylamide group; m is a number satisfying 10≤m≤500.
[5] The ultraviolet curable silicone composition according to any one of [1] to [4], further comprising:
   (D) an organopolysiloxane represented by the following general formula (3) 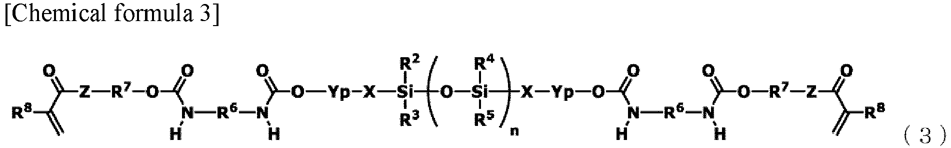 wherein each of R², R³, R⁴ and R⁵ independently represents a linear or branched alkyl group having 1 to 20 carbon atoms, or an aryl-containing group having 6 to 10 carbon atoms; each R⁶ independently represents a divalent organic group having 2 to 20 carbon atoms; each R⁷ independently represents an alkylene group having 2 to 20 carbon atoms; each R⁸ independently represents a hydrogen atom or a methyl group; n is 1 to 500; each X independently represents an alkylene group having 2 to 20 carbon atoms; each Y independently represents -OCH₂CH₂-, -OCH(CH₃)CH₂- or -OCH₂CH(CH₃)-; each p independently represents a number of not smaller than 1; each Z independently represents -O- or -NH-.
[6] The ultraviolet curable silicone composition according to any one of [1] to [5], further comprising:
   (E) a (meth)acrylate-containing compound having no siloxane structure.
[7] A cured product of the ultraviolet curable silicone composition according to any one of [1] to [6].
[8] An ink-jet ink composition comprising the ultraviolet curable silicone composition according to any one of [1] to [6].
[9] A composition for use in a 3D printer, comprising the ultraviolet curable silicone composition according to any one of [1] to [6].

### Effects of the invention

The ultraviolet curable silicone composition of the present invention is capable of being ejected via ink-jet ejection and turned into a cured product with a superior rubber property after curing. Thus, the ultraviolet curable silicone composition of the present invention is useful as an ink-jet ink material, particularly as a silicone material for use in an ink-jet type 3D printer.

### MODE FOR CARRYING OUT THE INVENTION

The present invention is described in greater detail hereunder.

### (A) Organopolysiloxane

A component (A) is an organopolysiloxane represented by the following general formula (1).

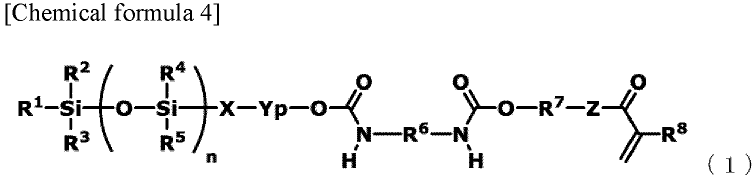

Each of R¹, R², R³, R⁴ and R⁵ in the general formula (1) independently represents a linear or branched alkyl group having 1 to 20 carbon atoms, or an aryl-containing group having 6 to 10 carbon atoms; the linear or branched alkyl group having 1 to 20 carbon atoms may for example be a group such as methyl, ethyl, n-propyl, i-propyl, n-butyl, i-butyl, s-butyl, t-butyl, pentyl, neopentyl, hexyl, heptyl, octyl, nonyl, decyl, undecyl, and dodecyl. Further, the aryl-containing group having 6 to 10 carbon atoms may for example be a group such as phenyl, toluyl, xylyl, ethylphenyl, benzyl, and phenethyl. R¹ is preferably a methyl group or a n-butyl group; R², R³, R⁴ and R⁵ are each preferably a methyl group.

An alkylene group having 2 to 20 carbon atoms, which is represented by X in the general formula (1), may for example be dimethylene, trimethylene, tetramethylene, pentamethylene, hexamethylene, heptamethylene, octamethylene, nonamethylene, decamethylene, undecamethylene, dodecamethylene, tetradecamethylene, 2-methylethylene, 2-methyltrimethylene, 2-methyltetramethylene, 2-methylpentamethylene, 2-methylhexamethylene, 2-methylheptamethylene, 2-methyloctamethylene, 2-methylnonamethylene, 2-methyldecamethylene, and 2-methylundecamethylene. X is preferably an alkylene group having 3 carbon atoms, such as trimethylene and 2-methylethylene.

In the general formula (1), Z represents -O- or -NH-, preferably -O-.

In the general formula (1), R⁶ represents a divalent organic group having 2 to 20 carbon atoms, particularly preferably a divalent residue derived from a diisocyanate. As such diisocyanate from which the divalent residue is derived, there may be listed, for example, trimethylhexamethylene diisocyanate (TMHMDI), isophorone diisocyanate (IPDI), methylenediphenyl diisocyanate (MDI), and 1,6-hexamethylene diisocyanate (HMDI). Among them, a preferable diisocyanate is isophorone diisocyanate (IPDI).

An alkylene group having 2 to 20 carbon atoms, which is represented by R⁷ in the general formula (1), may for example be a group such as dimethylene, trimethylene, tetramethylene, pentamethylene, hexamethylene, heptamethylene, octamethylene, nonamethylene, decamethylene, undecamethylene, dodecamethylene, tetradecamethylene, 2-methylethylene, 2-methyltrimethylene, 2-methyltetramethylene, 2-methylpentamethylene, 2-methylhexamethylene, 2-methylheptamethylene, 2-methyloctamethylene, 2-methylnonamethylene, 2-methyldecamethylene, and 2-methylundecamethylene. R⁷ is preferably an alkylene group having 3 carbon atoms, such as trimethylene and 2-methylethylene.

R⁸ in the general formula (1) represents a hydrogen atom or a methyl group, preferably a methyl group.

Yp in the general formula (1) represents a polyoxyalkylene segment, p represents a polymerization degree of the polyoxyalkylene segment; while there are no particular limitations so long as the polymerization degree is 1 or larger, preferred is 1 to 10. Y represents -OCH₂CH₂-, -OCH(CH₃)CH₂- or OCH₂CH(CH₃)-, preferably -OCH₂CH₂-.

n represents a polymerization degree of a polysiloxane segment, and is a number of 1 to 500, preferably 10 to 100. The value of n may for example be calculated as an average value via ²⁹Si-NMR measurement or the like.

### Examples of such organopolysiloxane may include the following compounds.

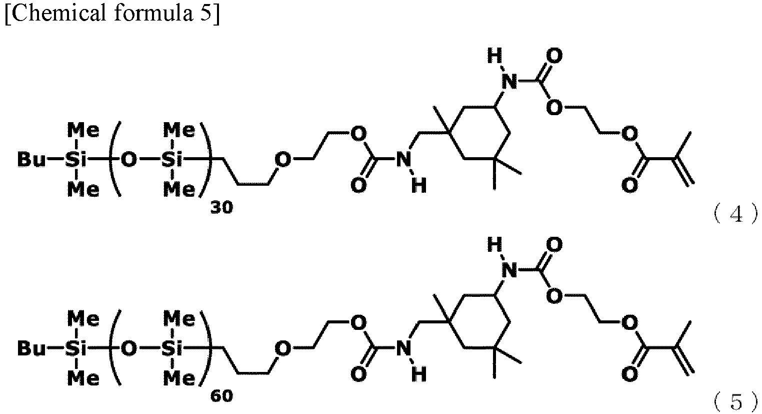

The one-end polymerizable organopolysiloxane represented by the general formula (1) can for example be produced by the following method.

That is, as shown in a reaction formula [b], the one-end polymerizable organopolysiloxane represented by the general formula (1) can be produced by subjecting a one-end hydroxyl group polyoxyalkylene-polysiloxane block copolymer (20) and a polymerizable group-containing isocyanate (30) to a urethanization reaction.

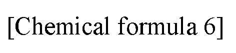

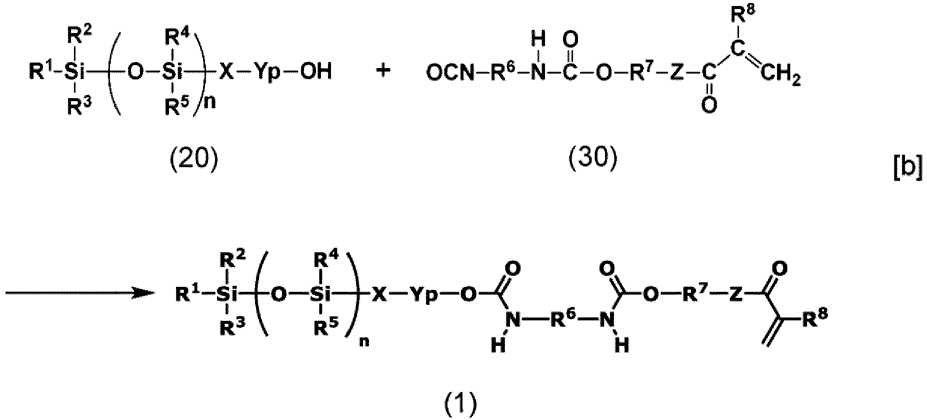

Here, R¹, R², R³, R⁴, R⁵, R⁶, R⁷, R⁸, n, X, Y, Z and p are identical to those shown in the general formula (1).

In the reaction [b] where the one-end hydroxyl group polyoxyalkylene-polysiloxane block copolymer (20) and the polymerizable group-containing isocyanate compound (30) are subjected to the urethanization reaction, a known and common catalyst may be used as a reaction catalyst, typical examples of which may include acid catalysts such as an inorganic acid, an ester of phosphoric acid or boric acid, and p-toluenesulfonic acid; amine catalysts such as triethylamine, N-methylmorpholine, N-ethylmorpholine, N,N-dimethylbenzylamine, N,N'-dimethylpiperazine, N,N,N',N'-tetramethylethylenediamine, N,N,N',N'-tetramethylhexamethylenediamine, N,N,N',N",N" -pentamethyldi ethylenetriamine, and hexamethylenetetramine; and organic metal compounds or metal chlorides, such as cobalt naphthenate, lead naphthenate, zinc naphthenate, stannous chloride, stannic chloride, tri-n-butyltin acetate, iron acetyl acetone, bismuth acetyl acetone, trimethyltin hydroxide, tetraoctyl titanate, dibutyltin dilaurate, tin octylate, cobalt octylate, and antimony trichloride. Any one kind of these catalysts may be used alone, or two or more kinds of them may be used in combination.

The amount of such catalyst used may be appropriately determined by a practitioner through a common method. In general, in terms of economic efficiency or the like, it is preferred that the catalyst be used in an amount of 10 to 5,000 ppm, more preferably 50 to 500 ppm, with respect to the mass of the one-end hydroxyl group polyoxyalkylene-polysiloxane block copolymer (20).

In the reaction formula [b], since the one-end hydroxyl group polyoxyalkylene-polysiloxane block copolymer of the formula (20) generally has a high viscosity, the reaction can also be sufficiently completed by adding a solvent and thus lowering the viscosity of the reaction solution. There are no limitations on such solvent so long as it is not one inhibiting the reaction, examples of which may include hydrocarbon-based solvents such as hexane and heptane; aromatic-based hydrocarbon solvents such as benzene, toluene and xylene; ether-based solvents such as diethyl ether, tetrahydrofuran and dioxane; halogenated hydrocarbon-based solvents such as methylene chloride and carbon tetrachloride; and ester-based solvents such as ethyl acetate. Any one of these solvents may be used alone, or several of them may be used in combination. It is preferred that these solvents contain as a small amount as possible of a component (e.g. water, alcohols, and amines) capable of reacting with the isocyanate compound.

While there are no particular limitations on a reaction temperature of the urethanization reaction, the reaction temperature is preferably a temperature not higher than the boiling point of the solvent if the solvent is used in the reaction. If not using a solvent, it is preferred that the reaction be performed at 0 to 250°C. In consideration of, for example, side reactions of polymerizable groups, it is preferred that the reaction be performed at 20 to 100°C.

Further, in the above reaction, a polymerization inhibitor may also be added if necessary. The polymerization inhibitor may simply be one that has been conventionally used with respect to a (meth)acrylic compound. There may be listed, for example, phenolic polymerization inhibitors such as hydroquinone, methylhydroquinone (MQ), hydroquinone monomethyl ether (MEHQ), 2-t-butylhydroquinone, 4-methoxyphenol, and 2,6-di-t-butyl-4-methylphenol(t-butylhydroxytoluene, BHT). Any one kind of these polymerization inhibitors may be used alone, or two or more kinds thereof may be used in combination. There are no particular limitations on the amount of the polymerization inhibitor; it is preferred that the polymerization inhibitor be in an amount of 5 to 500 ppm, more preferably 20 to 200 ppm, with respect to the mass of the compound obtained.

In order to obtain the polymerizable group-containing isocyanate in the reaction formula [b], which is represented by the general formula (30), there may be employed, for example, a method of reacting a compound A represented by a general formula (60) and a compound B represented by a general formula (70), as shown in the following reaction formula [c].

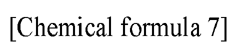

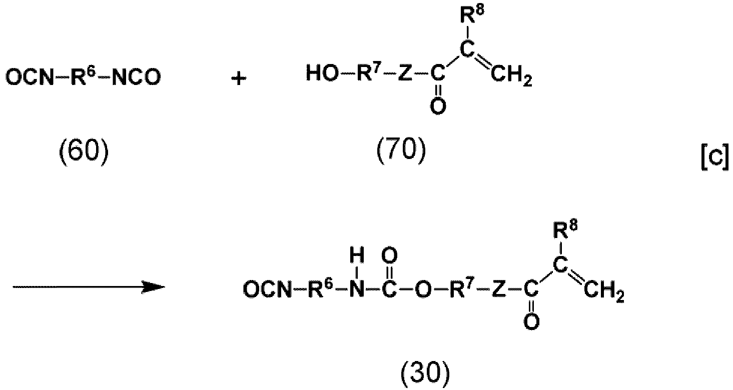

Here, R⁶, R⁷, R⁸ and Z are identical to those shown in the general formula (1).

Examples of the component (A) represented by the general formula (60) include diisocyanate compounds such as trimethylhexamethylene diisocyanate (TMHMDI), isophorone diisocyanate (IPDI), methylene diphenyl diisocyanate (MDI), and 1,6-hexamethylene diisocyanate (HMDI).

It is preferred that the compound A represented by the general formula (60) and the compound B represented by the general formula (70) be reacted at a molar ratio of A/B = 1/1.1 to 1/1.6. When the molar ratio of the compound B to 1 mol of the compound A is smaller than 1.1, a large amount of the diisocyanate compound A will remain after the reaction, whereby a dimer of the compound of the general formula (20) (i.e. a product with the compound of the general formula (20) being bonded to both ends of the compound A) will be generated at the time of the reaction expressed by the reaction formula [b], and may then remain as an impurity in the target product. Further, it is not economically efficient when the molar ratio of the compound B to 1 mol of the compound A is greater than 1.6, because a low yield of the target product will be observed due to a low generation rate of the compound represented by the general formula (30).

Other reaction conditions are identical to those of the urethanization reaction expressed by the reaction formula [b].

The one-end hydroxyl group polyoxyalkylene-polysiloxane block copolymer represented by the formula (20) may for example be produced via an addition reaction (hydrosilylation reaction) of a polyorganosiloxane (40) having an SiH group at one end and an alcohol (50) having a hydroxyl group at one end and an alkenyl group, as shown in the following reaction formula [a].

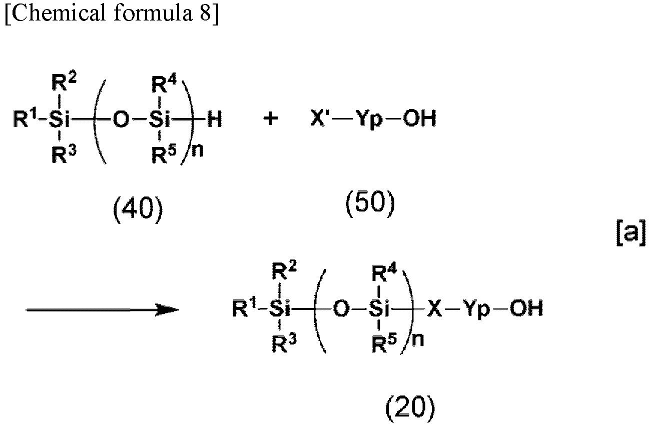

Here, R¹, R², R³, R⁴, R⁵, n, X, Y and p are identical to those shown in the general formula (1). X' represents an alkenyl group having 2 to 20 carbon atoms.

The alkenyl group having 2 to 20 carbon atoms, which is represented by X' in the general formula (50), may for example be vinyl, hexanyl or octenyl. X' is preferably an alkenyl group such as allyl and methacryl.

While a reaction solvent is not necessarily required in the hydrosilylation reaction formula [a], a proper solvent may be used as necessary so long as it does not inhibit the reaction. Specifically, there may be listed, for example, an aliphatic hydrocarbon solvent such as hexane and heptane; an aromatic hydrocarbon solvent such as benzene, toluene and xylene; an ether-based solvent such as diethyl ether, tetrahydrofuran (THF) and dioxane; a halogenated hydrocarbon solvent such as methylene chloride and carbon tetrachloride; an alcohol solvent such as methanol, ethanol and propanol; and water. Any one of these solvents may be used alone, or several of them may be used in combination.

While there are no particular limitations on a reaction temperature of the hydrosilylation reaction, the reaction temperature is normally a temperature not higher than the boiling point of the reaction solvent. If not using a reaction solvent, while the reaction can take place at 0 to 250°C, it is preferred that the reaction be performed at 20 to 120°C in terms of economic efficiency or the like. A reaction catalyst may be used in the hydrosilylation reaction; examples of a catalyst generally used include compounds containing platinum, rhodium, iridium, ruthenium, palladium, molybdenum and manganese. In addition, the catalyst used may be any of a so-called homogeneous type catalyst capable of being dissolved in a solvent; a supported type catalyst being supported on carbon, silica or the like; and a type of catalyst employing phosphine, amine, potassium acetate or the like as a cocatalyst.

As the alcohol (50) having a terminal hydroxyl group and an alkenyl group, there may be used a commercially available one such as allyl glycol, diethylene glycol monoallyl ether, triethylene glycol monoallyl ether, polyethylene glycol monoallyl ether, and polypropylene glycol monoallyl ether.

For example, as a polyethylene glycol monoallyl ether, there may be listed those produced by NOF CORPORATION, such as the ones shown below.

"UNIOX PKA-5001" (a polyethylene glycol monoallyl ether having an average molecular weight of 200, with X' in the formula (50) being an allyl group, and Y in the formula (50) being -OCH₂CH₂-)

"UNIOX PKA-5002" (a polyethylene glycol monoallyl ether having an average molecular weight of 400, with X' in the formula (50) being an allyl group, and Y in the formula (50) being -OCH₂CH₂-)

In the ultraviolet curable silicone composition of the present invention, the component (A) is preferably contained in an amount of 10 to 90% by mass, more preferably 20 to 80% by mass.

### (B) Photopolymerization initiator

Examples of a photopolymerization initiator (B) include 2,2-diethoxyacetophenone, 2,2-dimethoxy-1,2-diphenylethan-1-one (Omnirad 651), 1-hydroxy-cyclohexyl-phenyl-ketone (Omnirad 184), 2-hydroxy-2-methyl-1-phenyl-propan-1-one (Omnirad 1173), 2-hydroxy-1-{4-[4-(2-hydroxy-2-methyl-propionyl)-benzyl]-phenyl}-2-methyl-propane-1-one (Omnirad 127), phenylglyoxylic acid methyl ester (Omnirad MBF), 2-methyl-1-[4-(methylthio)phenyl]-2-morpholinopropan-1-one (Omnirad 907), 2-benzyl-2-dimethylamino-1-(4-morpholinophenyl)-1-butanone (Omnirad 369), bis(2,4,6-trimethylbenzoyl)-phenylphosphine oxide (Omnirad 819), and 2,4,6-trimethylbenzoyl-diphenyl-phosphine oxide (Omnirad TPO H, all produced by IGM Resins B.V); and mixtures thereof.

Of the above listed examples of the component (B), in terms of compatibility to the component (A), preferred are 2,2-diethoxyacetophenone, 2-hydroxy-2-methyl-1-phenyl-propan-1-one (Omnirad 1173), bis(2,4,6-trimethylbenzoyl)-phenylphosphine oxide (Omnirad 819), and 2,4,6-trimethylbenzoyl-diphenyl-phosphine oxide (Omnirad TPO H).

Of the above listed examples of the component (B), in terms of compatibility to the component (A), more preferred are 2-hydroxy-2-methyl-1-phenyl-propan-1-one (Omnirad 1173) and 2,4,6-trimethylbenzoyl-diphenyl-phosphine oxide (Omnirad TPO H).

In terms of curability, the photopolymerization initiator is preferably added in an amount of 0.1 to 50 parts by mass per 100 parts by mass of the component (A).

### (C) Organopolysiloxane

If necessary, the ultraviolet curable silicone composition of the present invention may further contain, as a component (C), an organopolysiloxane represented by the following general formula (2). By adding the component (C), the hardness of a cured product obtained can be improved.

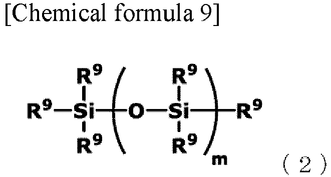

Each R⁹ in the formula (2) independently represents a group selected from a monovalent aliphatic hydrocarbon group having 1 to 10 carbon atoms, an acryloyl group, a methacryloyl group, an alkyl acrylate group, an alkyl methacrylate group, an acrylamide group and a methacrylic acid amide group. As such monovalent aliphatic hydrocarbon group, preferred is a monovalent aliphatic hydrocarbon group having 1 to 8 carbon atoms, examples of which may include alkyl groups such as a methyl group, an ethyl group, a propyl group, a butyl group, a pentyl group, a hexyl group and an octyl group. More preferred is a monovalent aliphatic hydrocarbon group having 1 to 6 carbon atoms; particularly, in terms of ease in synthesis and cost, it is preferred that 80% or more of all the R⁹s be methyl groups.

Further, at least two R⁹s in each molecule of the organopolysiloxane represented by the formula (2) are groups selected from an acryloyl group, a methacryloyl group, an alkyl acrylate group, an alkyl methacrylate group, an acrylamide group and a methacrylic acid amide group. The alkyl acrylate group may for example be a butyl acrylate group, propyl acrylate group or the like. The alkyl methacrylate group may for example be a butyl methacrylate group, a propyl methacrylate group or the like. As the at least two R⁹s present in each molecule of the compound represented by the formula (2), preferred are a propyl methacrylate group, a propyl acrylate group, an acrylamide group or a methacrylic acid amide group; they may be identical to or different from one another.

m in the formula (2) is a number satisfying 10≤m≤500, preferably 20≤m≤400, more preferably 30≤m≤300. When m is smaller than 10, the composition will volatilize easily; when m is larger than 500, the composition will exhibit a higher viscosity, which makes ink-jet ejection difficult. The value of m may for example be calculated as an average value via ²⁹Si-NMR measurement or the like.

In terms of ease in synthesis and cost, the organopolysiloxane represented by the formula (2) is preferably one having, at both ends of each molecule thereof, a propyl methacrylate group, a propyl acrylate group, an acrylamide group or a methacrylic acid amide group.

Such organopolysiloxane may for example be a compound shown below.

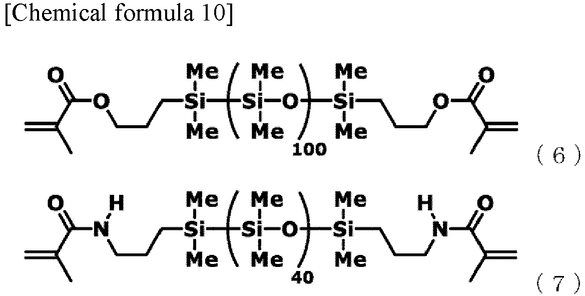

If used, the organopolysiloxane as the component (C) is preferably added in an amount of 1 to 300 parts by mass, more preferably 10 to 200 parts by mass, per 100 parts by mass of the component (A), in order to keep the viscosity of the composition in a range enabling ink-jet ejection and achieve an appropriate hardness of the cured product.

### (D) Organopolysiloxane

If necessary, the ultraviolet curable silicone composition of the present invention may further contain, as a component (D), an organopolysiloxane represented by the following general formula (3). By adding the component (D), the hardness of the cured product obtained can be improved. 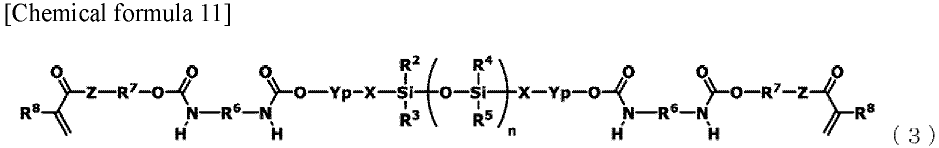 (In the formula (3), each of R², R³, R⁴ and R⁵ independently represents a linear or branched alkyl group having 1 to 20 carbon atoms, or an aryl-containing group having 6 to 10 carbon atoms; each R⁶ independently represents a divalent organic group having 2 to 20 carbon atoms; each R⁷ independently represents an alkylene group having 2 to 20 carbon atoms; each R⁸ independently represents a hydrogen atom or a methyl group; n is 1 to 500; each X independently represents an alkylene group having 2 to 20 carbon atoms; each Y independently represents -OCH₂CH₂-, -OCH(CH₃)CH₂- or -OCH₂CH(CH₃)-; each p independently represents a number of not smaller than 1; each Z independently represents -O- or -NH-.)

R², R³, R⁴, R⁵, R⁶, R⁷, R⁸, n, X, Y, p and Z in the general formula (3) may for example be those that are similar to those exemplified in the component (A).

Such organopolysiloxane may for example be a compound shown below.

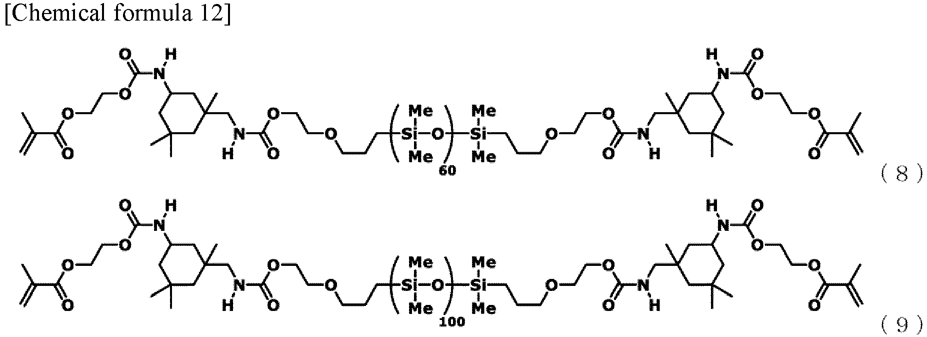

The organopolysiloxane represented by the general formula (3) can for example be produced by subjecting a dual-end hydroxyl group polyoxyalkylene-polysiloxane block copolymer and the polymerizable group-containing isocyanate (30) to a urethanization reaction.

If used, the component (D) is preferably added in an amount of 1 to 300 parts by mass, more preferably 10 to 200 parts by mass, per 100 parts by mass of the component (A), in order to keep the viscosity of the composition in a range enabling ink-jet ejection and achieve an appropriate hardness of the cured product.

### (E) (Meth)acrylate-containing compound having no siloxane structure

If necessary, the ultraviolet curable silicone composition of the present invention may further contain, as a component (E), a (meth)acrylate-containing compound having no siloxane structure. By adding the component (E), the viscosity of the composition can be lowered and thus be adjusted to a range suitable for ink-jet ejection.

Examples of a monofunctional (meth)acrylate compound having no siloxane structure include isoamyl acrylate, lauryl acrylate, stearyl acrylate, ethoxy-diethylene glycol acrylate, methoxy-triethylene glycol acrylate, 2-ethylhexyl-diglycol acrylate, phenoxyethyl acrylate, phenoxydiethylene glycol acrylate, tetrahydrofurfuryl acrylate, isobornyl acrylate, and mixtures thereof, of which isobornyl acrylate is particularly preferred.

Examples of a multifunctional (meth)acrylate compound having no siloxane structure include triethylene glycol diacrylate, polytetramethylene glycol diacrylate, neopentyl glycol diacrylate, 1,6-hexanediol diacrylate, dimethylol-tricyclodecane diacrylate, trimethylolpropane triacrylate, pentaerythritol tetraacrylate, and mixtures thereof, of which dimethylol-tricyclodecane diacrylate is particularly preferred.

If used, the component (E) is preferably added in an amount of 1 to 500 parts by mass, more preferably 10 to 400 parts by mass, per 100 parts by mass of the component (A). If the amount of the component (E) is in these ranges, the cured product obtained can be restricted from exhibiting an excessively high hardness.

### Other components

Without impairing the effects of the present invention, the ultraviolet curable silicone composition of the present invention may contain additives such as a color material (pigment or dye), a silane coupling agent, an adhesion aid, a polymerization inhibitor, an antioxidant, an ultraviolet absorber and a light stabilizer. Further, the composition of the present invention may also be appropriately mixed with other resin composition(s) before use.

### Method for producing ultraviolet curable silicone composition

The ultraviolet curable silicone composition of the present invention can be obtained by, for example, stirring and mixing given amounts of the components (A) and (B); and if necessary, given amounts of the components (C), (D) and (E) as well as other components. There are no particular limitations on a device used for an operation such as stirring; there may be employed a grinder, a triple roll mill, a ball mill, a planetary mixer and the like. Further, these devices may also be appropriately combined.

In the case of the ultraviolet curable silicone composition of the present invention, as a guide for enabling ink-jet ejection, the dynamic viscosity of the composition at 25°C is preferably 5 to 300 mm²/s, more preferably 10 to 200 mm²/s. Further, the surface tension of the composition is preferably 21 to 36 mN/m. When the dynamic viscosity and surface tension are in these ranges, ink-jet ejection can be performed in a stable manner. In order for the dynamic viscosity and surface tension of the composition to fall into the above ranges, it is required that there be used the component (A) with n in the formulae (1) being 1 to 500. Further, the dynamic viscosity of the composition can be adjusted by adding the component (E).

The ultraviolet curable silicone composition of the present invention can be rapidly cured when irradiated with an ultraviolet light. As a light source of the ultraviolet light with which the ultraviolet curable silicone composition of the present invention is to be irradiated, there may be listed, for example, a UVLED lamp, a high-pressure mercury lamp, an ultra-high pressure mercury lamp, a metal halide lamp, a carbon-arc lamp, and a xenon lamp. The irradiation dose (cumulative intensity) of the ultraviolet light is, for example, preferably 1 to 5,000 mJ/cm², more preferably 10 to 4,000 mJ/cm², with respect to a sheet of the composition of the present invention that has been molded into a thickness of about 2.0 mm. That is, when using an ultraviolet light of an irradiance of 100 mW/cm², ultraviolet irradiation may be performed for about 0.01 to 50 sec.

Further, in order for the cured product of the ultraviolet curable silicone composition of the present invention to exhibit a superior rubber property, it is preferred that the cured composition have a hardness (Type A) of not lower than 30, more preferably not lower than 35. The tensile strength thereof is preferably not lower than 2.0 MPa, more preferably not lower than 2.5 MPa. The elongation at break is preferably not smaller than 100%, more preferably not smaller than 140%. Here, these values are those measured in accordance with JIS-K6249:2003.

### WORKING EXAMPLES

The present invention is described in detail hereunder with reference to working and comparative examples; the present invention shall not be limited to the working examples described below.

Evaluations were performed on compositions produced at the compounding ratios shown in Table 1.

Here, in the following examples, a dynamic viscosity is a value measured by an Ostwald viscometer at 25°C. A refractive index is a value measured by a digital refractometer RX-5000 (by ATAGO CO., LTD.) at 25°C. A hydroxyl value is a value measured in accordance with JIS K0070:1992. A surface tension is a value measured by an automated surface tensiometer model CBVP-Z manufactured by Kyowa Interface Science Co., Ltd. Further, an ink-jet ejectability was evaluated using a liquid droplet observation instrument IJK-200S (glass-made 1 nozzle ink-jet head IJHE-1000) manufactured by MICROJET Corporation, where the evaluation was conducted under an ejection condition(s) of drive voltage 80V; head temperature 80°C, and where ∘ was given when ink-jet ejection was ablet to be performed, whereas × was given when ink-jet ejection was unable to be performed.

The hardness, elongation at break and tensile strength of the cured product were measured in accordance with JIS-K6249:2003. As a curing condition at that time, ultraviolet irradiation was performed at a dose of 4,000 mJ/cm² under a nitrogen atmosphere, using a lamp H (M) 06-L-61 manufactured by EYE GRAPHICS CO.,LTD. Further, the thickness of the sheet was set to 2.0 mm.

The components used in the working and comparative examples are as follows. ·Component (A)

### A-1: Organopolysiloxane obtained by the following synthesis example 1

### [Synthesis example 1]

Here, 126.8 g of isophorone diisocyanate (IPDI; molecular weight 222) and 0.021 g of iron (III) acetylacetone were mixed in a 2L glass reactor equipped with a stirrer, a thermometer, a reflux condenser and a dropping funnel, followed by heating them to 30°C and then delivering thereinto 104 g of hydroxyethyl methacrylate (HEMA; molecular weight 130) by drops. After it was confirmed that heat generation had stopped, 0.92 g of methylhydroquinone (MQ) and 0.92 g of t-butylhydroxytoluene (BHT) were added as polymerization inhibitors, and the system was heated to 50°C so as to then allow the reaction to proceed for 1.5 hours. Next, 800 g of a single-end carbinol-modified silicone (X-22-170DX by Shin-Etsu Chemical Co., Ltd.; hydroxyl value 10) and 0.16 g of bismuth carboxylate were put into the same reactor, and the system was heated to 80°C so as to then allow the reaction to proceed for 2 hours. In order to deactivate the remaining isocyanate groups, 56 g of HEMA was further added to react the system for 1 hour. A reaction solution thus obtained was reduced to 25°C, and low-molecular impurities produced in side reactions were washed three times with 1,080 g of methanol, followed by performing vacuum concentration to eliminate volatile matter contents, thereby obtaining 774 g of a light yellow transparent organopolysiloxane A-1 (dynamic viscosity: 419 mm²/s, refractive index: 1.4116). The following formula (5) shows the structure of A-1 as confirmed by ²⁹Si-NMR measurement.

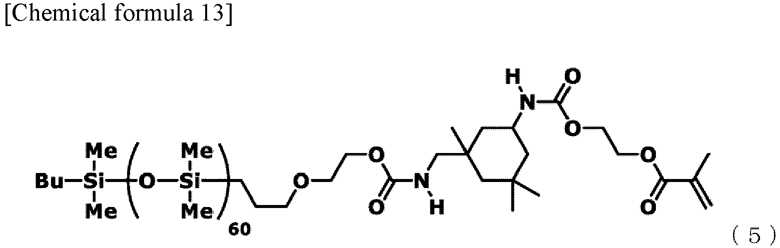

### A-2: Organopolysiloxane represented by the following formula (10)

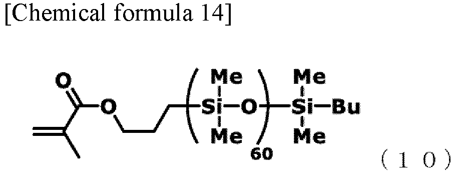

### ·Component (B)

B-1: 2-hydroxy-2-methyl-1-phenyl-propan-1-one (Omnirad 1173 by IGM Resins B.V) B-2: 2,4,6-trimethylbenzoyl-diphenyl-phosphine oxide (Omnirad TPO H by IGM Resins B.V)

### ·Component (C)

### C-1: Organopolysiloxane represented by the following formula (11)

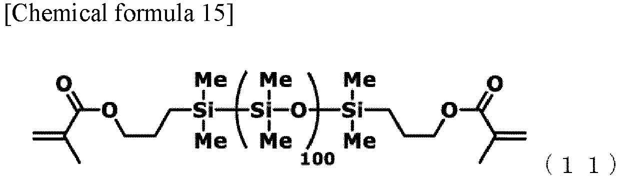

### C-2: Organopolysiloxane represented by the following formula (12)

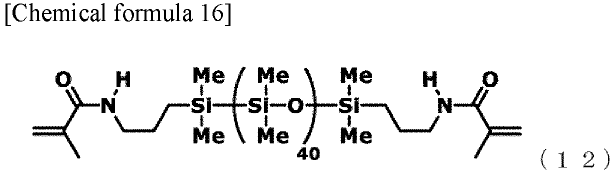

### ·Component (D)

### D: Organopolysiloxane obtained by the following synthesis example 2

### [Synthesis example 2]

Here, 380.4 g of isophorone diisocyanate (IPDI; molecular weight 222) and 0.063 g of iron (III) acetylacetone were mixed in a 2L glass reactor equipped with a stirrer, a thermometer, a reflux condenser and a dropping funnel, followed by heating them to 30°C and then delivering thereinto 312 g of hydroxyethyl methacrylate (HEMA; molecular weight 130) by drops. After it was confirmed that heat generation had stopped, 2.76 g of methylhydroquinone (MQ) and 2.76 g of t-butylhydroxytoluene (BHT) were added as polymerization inhibitors, and the system was heated to 50°C so as to then allow the reaction to proceed for 1.5 hours. Next, 1,200 g of a dual-end carbinol-modified silicone (KF-6003 by Shin-Etsu Chemical Co., Ltd.; hydroxyl value 12) and 0.48 g of bismuth carboxylate were put into the same reactor, and the system was heated to 80°C so as to then allow the reaction to proceed for 2 hours. In order to deactivate the remaining isocyanate groups, 168 g of HEMA was further added to react the system for another 1 hour. A reaction solution thus obtained was reduced to 25°C, and low-molecular impurities produced in side reactions were washed three times with 2,061 g of methanol, followed by performing vacuum concentration to eliminate volatile matter contents, thereby obtaining 758 g of a light yellow transparent organopolysiloxane D (dynamic viscosity: 5,686 mm²/s, refractive index: 1.41447). The following formula (8) shows the structure of D as confirmed by ²⁹Si-NMR measurement.

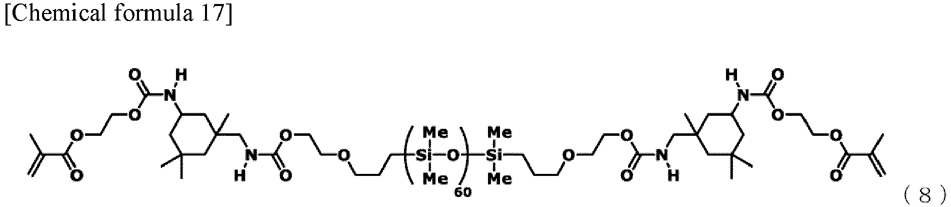

### ·Component (E)

### E: Isobornyl acrylate (Light Acrylate IB-XA by Kyoeisha Chemical Co., Ltd.)

**[Table 1]**

| | | Working example 1 | Working example 2 | Working example 3 | Working example 4 | Comparative example 1 | Comparative example 2 | Comparative example 3 | Comparative example 4 |
|---|---|---|---|---|---|---|---|---|---|
| Compounding ratio (part by mass) | A-1 | 100 | 100 | 100 | 100 | - | - | - | - |
| | A-2 | - | - | - | - | 100 | 100 | 100 | 100 |
| | B-1 | 7.0 | 3.3 | 7.0 | 3.3 | 7.0 | 3.3 | 7.0 | 3.3 |
| | B-2 | 6.0 | 2.8 | 6.0 | 2.8 | 6.0 | 2.8 | 6.0 | 2.8 |
| | C-1 | 183 | - | - | - | 183 | - | - | - |
| | C-2 | - | 33 | - | - | - | 33 | - | - |
| | D | - | - | 183 | 33 | - | - | 183 | 17 |
| | E | 133 | 63 | 133 | 63 | 133 | 63 | 133 | 32 |
| Property of composition | Dynamic viscosity (mm²/s) | 72 | 62 | 148 | 94 | 56 | 33 | 114 | 49 |
| | Surface tension (mN/m) | 22 | 22 | 22 | 22 | 22 | 22 | 22 | 22 |
| | Ink-jet ejectability | ○ | ○ | ○ | ○ | ○ | ○ | ○ | ○ |
| Property of cured product | Hardness (Type A) | 36 | 55 | 57 | 40 | 25 | 18 | 45 | 17 |
| | Tensile strength (MPa) | 2.0 | 3.0 | 4.0 | 3.6 | 1.2 | 0.9 | 1.8 | 0.9 |
| | Elongation at break (%) | 190 | 140 | 190 | 210 | 190 | 160 | 180 | 200 |

As shown in Table 1, the ultraviolet curable silicone composition of the present invention has a favorable ink-jet ejectability, and exhibits a superior hardness, tensile strength and elongation at break after curing; the composition of the invention is useful as an ink-jet ink material, particularly as a silicone material for use in an ink-jet type 3D printer. In contrast, in the cases of the comparative examples 1 to 4 employing, instead of the component (A), organopolysiloxane components failing to meet the ranges of the formula (1), hardness and tensile strength were insufficient.

## Claims

1. An ultraviolet curable silicone composition comprising:
(A) a one-end polymerizable organopolysiloxane represented by the following formula (1) 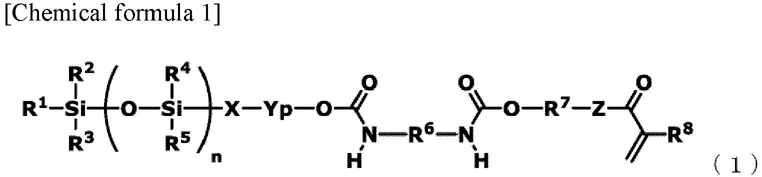 wherein each of R¹, R², R³, R⁴ and R⁵ independently represents a linear or branched alkyl group having 1 to 20 carbon atoms, or an aryl-containing group having 6 to 10 carbon atoms; R⁶ represents a divalent organic group having 2 to 20 carbon atoms; R⁷ represents an alkylene group having 2 to 20 carbon atoms; R⁸ represents a hydrogen atom or a methyl group; n is a number of 1 to 500; X represents an alkylene group having 2 to 20 carbon atoms; Y represents -OCH₂CH₂-, -OCH(CH₃)CH₂- or -OCH₂CH(CH₃)-; p is a number of not smaller than 1; Z is - O- or -NH-; and
(B) a photopolymerization initiator.

2. The ultraviolet curable silicone composition according to claim 1, wherein in the general formula (1), R¹ is an n-butyl group, each of R², R³, R⁴ and R⁵ is a methyl group, R⁷ is a dimethylene group, and Z is -O-.

3. The ultraviolet curable silicone composition according to claim 1 or 2, wherein in the general formula (1), R⁶ is a divalent residue derived from a diisocyanate selected from the group consisting of trimethylhexamethylene diisocyanate (TMHMDI), isophorone diisocyanate (IPDI), methylenediphenyl diisocyanate (MDI), and 1,6-hexamethylene diisocyanate (HMDI).

4. The ultraviolet curable silicone composition according to any one of claims 1 to 3, further comprising:
(C) an organopolysiloxane represented by the following general formula (2) 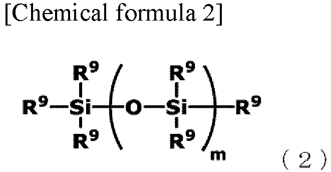 wherein each R⁹ independently represents a group selected from a monovalent aliphatic hydrocarbon group having 1 to 10 carbon atoms, an acryloyl group, a methacryloyl group, an alkyl acrylate group, an alkyl methacrylate group, an acrylamide group and a methacrylamide group; the organopolysiloxane represented by the formula (2) has, in each molecule, at least two groups that are selected from an acryloyl group, a methacryloyl group, an alkyl acrylate group, an alkyl methacrylate group, an acrylamide group and a methacrylamide group; m is a number satisfying 10≤m≤500.

5. The ultraviolet curable silicone composition according to any one of claims 1 to 4, further comprising:
(D) an organopolysiloxane represented by the following general formula (3) 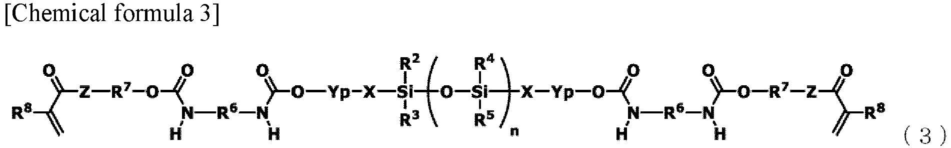 wherein each of R², R³, R⁴ and R⁵ independently represents a linear or branched alkyl group having 1 to 20 carbon atoms, or an aryl-containing group having 6 to 10 carbon atoms; each R⁶ independently represents a divalent organic group having 2 to 20 carbon atoms; each R⁷ independently represents an alkylene group having 2 to 20 carbon atoms; each R⁸ independently represents a hydrogen atom or a methyl group; n is 1 to 500; each X independently represents an alkylene group having 2 to 20 carbon atoms; each Y independently represents -OCH₂CH₂-, -OCH(CH₃)CH₂- or -OCH₂CH(CH₃)-; each p independently represents a number of not smaller than 1; each Z independently represents -O- or -NH-.

6. The ultraviolet curable silicone composition according to any one of claims 1 to 5, further comprising:
(E) a (meth)acrylate-containing compound having no siloxane structure.

7. A cured product of the ultraviolet curable silicone composition according to any one of claims 1 to 6.

8. An ink-jet ink composition comprising the ultraviolet curable silicone composition according to any one of claims 1 to 6.

9. A composition for use in a 3D printer, comprising the ultraviolet curable silicone composition according to any one of claims 1 to 6.
